# EUROPEAN PATENT APPLICATION

(11) **EP 3 556 482 A1**
(43) Date of publication of application: **23.10.2019**
(21) Application number: 17880125.4
(22) Date of filing: 14.12.2017
(51) Int. Cl.: B21B 27/00, B21B 1/22, C23C 2/26, C23C 2/06, C23C 2/40

(54) **ROLLING ROLL AND PLATED STEEL SHEET PRODUCED THEREBY**

(30) Priority: 14.12.2016 KR 20160170165
(71) Applicant: Posco, Pohang-si, Gyeongsangbuk-do 37859 (KR)
(72) Inventor: JEON, Sun-Ho, Gwangyang-si Jeollanam-do 57807 (KR); HONG, Moon-Hi, Gwangyang-si Jeollanam-do 57807 (KR); SHIN, Seok-Mo, Gwangyang-si Jeollanam-do 57807 (KR)
(74) Representative: Zech, Stefan Markus
(86) International application number: PCT/KR2017/014711
(87) International publication number: WO 2018/110995

(57) **Abstract**

An embodiment of the present invention provides a rolling roll which reduces the occurrence of galling by imparting regular fine concave and convex parts to a surface of a plated steel sheet, and a plated steel sheet produced by the rolling roll. The rolling roll according to an aspect of the present invention is a rolling roll comprising: a rolling roll body (112) installed to a rolling mill and used for rolling a material; and a surface treatment part formed on a surface of the rolling roll body (112) and coming into contact with the material, wherein the surface treatment part is formed to have fine concave and convex patterns forming ridges and valleys on a surface thereof, wherein the fine concave and convex patterns are formed such that the roughness skewness, indicating the difference between the height of the ridges and the depth of the valleys, has a negative (-) value.

## Description

### [Technical Field]

The present disclosure relates to a rolling roll capable of improving a quality of press forming of a plated steel sheet and a plated steel sheet produced by the rolling roll.

### [Background Art]

In general, a galvanized steel sheet, an example of a plated steel sheet, has excellent corrosion resistance, weldability and paintability, and is thus widely used as a steel sheet for an external vehicle panel. Since the galvanized steel sheet is used as an external vehicle panel, not only aesthetic surface appearance but also excellent processability during press forming have been required.

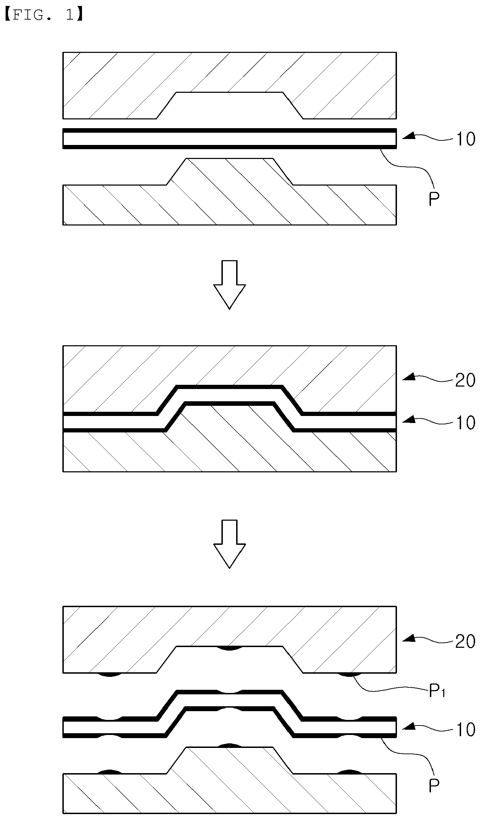

In detail, a galvanized steel sheet 10, in detail, a plated layer p of a hot-dip galvanized steel sheet 10 is formed of pure zinc (that is, the η (eta) phase), in a manner different from an alloyed hot-dip galvanized steel sheet in which microscopic concave and convex sections are formed on a surface during an alloying process. Thus, a surface of the plated layer after plating is smooth, a film itself is soft, and a melting point is low. In this regard, as illustrated in FIG. 1, during press forming, galling, in which a portion p₁ of a plated layer is separated due to the occurrence of adhesion with a press mold 20, may easily occur.

The galling means that a plated portion p₁ of a plated layer p is peeled off, and is then cold-pressed onto a surface of a mold, to peel a portion of a material together, for example, a portion of the plated layer p of the galvanized steel sheet 10, while the plated portion p₁ of the plated layer, pressed on a surface of the mold 20 is peeled off, due to a scratch defect in a surface of a material when a new material, for example, a galvanized steel sheet 10 is introduced into the press mold 20 and formed, or friction with a material during forming.

Since the galling, occurring during press forming of the hot-dip galvanized steel sheet 10, significantly affects a quality of a surface of a press formed product of a plated steel sheet and the life time of the mold 20, the galling may cause in an increase in press processing costs.

Therefore, fine concave and convex sections are imparted on a surface of a hot-dip galvanized steel sheet for an external vehicle panel in order to prevent galling occurring during a press forming process. The fine concave and convex sections of the hot-dip galvanized steel sheet surface reduces a contact point with a mold during press forming, and serves as an oil pocket which contains press oil, a lubricant, rust preventive oil, and the like, thereby reducing sliding resistance (friction) while preventing damage to a mold. Thus, the fine concave and convex sections may prevent galling.

For example, in 1) Japanese Patent Application Laid-Open No. 1995-009016, a maximum diameter of an upper surface of a convex portion on a surface of a roll is 500 µm, and roughness in a double circle having a minimum diameter of 50 µm is imparted therein such that a ratio of a convex portion to a surface area of a roll is 10% to 35%, and a concave portion capable of containing lubricant of 4 µm to 8 µm when concave and convex sections are transferred to a steel sheet is formed. In 2) Japanese Unexamined Patent Publication (KOKAI) No. Heisei 7-136701, rolling is performed by a rolling roll having regular concave and convex sections by laser processing, in detail, a skin pass rolling roll such that the sum of a volume of a concave portion per unit area of a galvanized steel sheet is 0.0001 mm2 to 0.01 mm2, thereby improving the galling properties and image clarity. In addition, as another method, in 3) Korean Patent Application Laid-open Publication No. 2007-0087723, a phosphate solution, formed of manganese-nickel, is coated using electroplating above an alloyed hot-dip galvanized steel sheet, thereby preventing adhesion by reducing friction between a plated layer and a mold during press forming due to a lubricant layer.

However, even if the sum of a volume of a concave portion per unit area of a galvanized steel sheet of 1) and 2) according to the related art is adjusted to a constant value or more, depending on a shape of surface concave and convex sections and a direction of flow, there may be friction characteristics with the oil content. Thus, during press forming, the galling behavior is significantly different.

In other words, even if the sum of a volume of the concave portion per unit area of an indentation of skin pass rolling is satisfied with a value proposed in the related art, the concave portion only serves as an absorption hole which simply absorbs an excess amount of lubricant, rather than serving a lubrication action for reducing friction between a mold and a plated steel sheet.

In addition, in the case of 3), according to the related art, in order to reduce friction of a plated steel sheet and improve press forming, lubrication treatment is performed at high cost, relatively uneconomical, and weldability and adhesiveness are also deteriorated, so it is not preferable.

Accordingly, in recent years, there has been demand for development of a technique for manufacturing a galvanized steel sheet at low cost, while press formability is excellent and sliding frictional resistance is reduced during press forming of a galvanized steel sheet.

### [Prior Art Document]

### [Patent Document]

(Patent Document 1) Japanese Patent Laid-Open Publication No. 1995-009016
(Patent Document 2) Japanese Unexamined Patent Publication (KOKAI) No. Heisei 7-136701
(Patent Document 3) Korean Patent Application Laid-open Publication No. 2007-0087723

### [Disclosure]

### [Technical Problem]

An aspect of the present disclosure may provide a rolling roll which reduces the occurrence of galling by imparting regular fine concave and convex sections to a surface of a plated steel sheet and a plated steel sheet produced by the rolling roll.

### [Technical Solution]

According to an aspect of the present disclosure, a rolling roll includes a rolling roll body installed in a rolling mill and used for rolling a material and a surface treatment part formed on a surface of the rolling roll body and coming into contact with the material, the surface treatment part is formed to have fine concave and convex patterns forming ridges and valleys in a surface, and the fine concave and convex patterns are formed such that the roughness skewness, indicating the difference between the height of the ridges and the depth of the valleys, has a negative (-) value.

The fine concave and convex patterns are arranged such that a short side of the ridges is positioned in a circumferential direction of the rolling roll body, and long sides of the ridges are positioned in an axial direction of the rolling roll body.

In the fine concave and convex patterns, a length of long sides of the ridges is 100 µm to 500 µm, a length of a short sides of the ridges is 1/2 or less of the long side, a depth of the concave and convex sections is 10 µm to 25 µm, and an area formed by the ridges is 30% to 50% of a surface area of the rolling roll body.

According to another aspect of the present disclosure, a plated steel sheet is rolled by the rolling roll described above, and having fine concave and convex sections corresponding to fine concave and convex patterns of the rolling roll on a surface thereof, the plated steel sheet is formed such that roughness skewness of the fine concave and convex sections, formed on a surface, has a positive (+) value, an area of an oil pocket, formed between ridges of the fine concave and convex sections in contact with a press forming mold, and in which lubricant remains, is at least 450 nm².

In the plated steel sheet, roughness skewness of the fine concave and convex sections, formed on a surface, is preferably at least 0.19.

### [Advantageous Effects]

According to an exemplary embodiment in the present disclosure, a galvanized steel sheet having excellent press formability by preventing a galling phenomenon, in which a plated layer is peeled off during press forming of a plated steel sheet, may be obtained, and a surface defect such as a flow pattern generated during a plating process, spangle uneveness, is removed in a skin pass rolling process to improve a surface quality.

### [Description of Drawings]

FIG. 1 is a process chart illustrating a press forming process of a galvanized steel sheet according to the related art.
FIG. 2 is a front view of a rolling roll according to an embodiment.
FIG. 3 is a cross-sectional view taken along line A-A' of FIG. 2.
FIG. 4 is a perspective view of a galvanized steel sheet rolled using a rolling roll according to an embodiment.
FIG. 5 is a cross-sectional view illustrating fine concave and convex patterns of a rolling roll according to the related art for comparison with a rolling roll according to an embodiment.

### [Best Mode for Invention]

Embodiments of the present disclosure will hereinafter be described with reference to the attached drawings. The disclosure may, however, be exemplified in many different forms and should not be construed as being limited to the specific embodiments set forth herein. The shapes and sizes of components shown in the drawings are exaggerated for clarity. Elements having substantially the same or equivalent constitutions and functions are referred to by the same reference numerals throughout the specification.

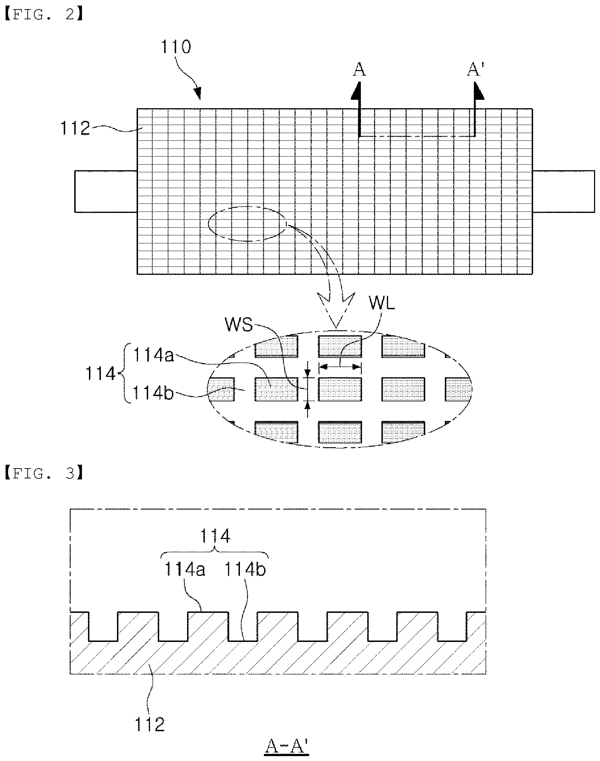

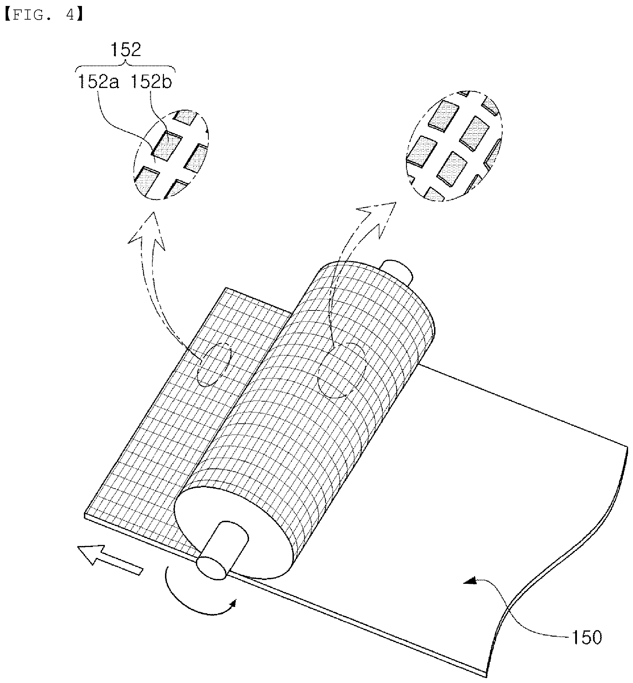

FIG. 2 is a front view of a rolling roll according to an embodiment, FIG. 3 is a cross-sectional view taken along line A-A' of FIG. 2, and FIG. 4 is a perspective view of a galvanized steel sheet rolled using a rolling roll according to an embodiment.

Referring to FIGS. 2 to 4, a rolling roll 110 (not shown) according to an embodiment is installed to a rolling mill and may be used for rolling a material. Preferably, the rolling roll 110, described in an embodiment, may be a skin pass rolling roll used in a skin pass rolling process.

In detail, the rolling roll 110 according to an embodiment may be used for rolling a galvanized steel sheet 150 to form fine concave and convex sections 152 on a surface before a product is completed by press forming a material, for example, the galvanized steel sheet 150.

In the galvanized steel sheet 150, particularly, a hot-dip galvanized steel sheet 150, a surface is smooth and a film itself is soft. Thus, due to the occurrence of adhesion with a press mold (20 of FIG. 1) during press forming, galling, in which a plated layer p is separated, may easily occur. In this regard, before forming with the press mold 20, a skin pass rolling process for forming fine concave and convex sections 152 by skin pass rolling a surface of the galvanized steel sheet 150 may be performed.

In an embodiment, a material to be rolled, that is, the galvanized steel sheet 150 may be provided with the fine concave and convex sections 152 by the rolling roll 110 in a rolling process. Here, according to a shape of the fine concave and convex sections 152 formed in the galvanized steel sheet 150 as described above, or the like, there may be a difference in a repeated friction coefficient, a processing defect occurrence behavior, or the like.

The rolling roll 110 according to an embodiment may include a rolling roll body 112 installed to a rolling mill and used for rolling a material, and a surface treatment part formed on a surface of the rolling roll body 112 and coming into contact with a material.

The surface treatment part may be formed to have fine concave and convex patterns 114 forming ridges (a convex portion; 114a) and valleys (a concave portion; 114b) on a surface, and may be formed while the fine concave and convex sections 152 are transferred on a surface of the galvanized steel sheet 150 in a shape opposite to those of the fine concave and convex patterns 114 formed in the surface treatment part as described above.

In detail, in an embodiment, the fine concave and convex patterns 114, formed in the surface treatment part of the rolling roll 110, may be formed such that roughness skewness, indicating the difference between a height of the ridge 114a and a depth of the valley 114b, has a negative (-) value. Accordingly, the fine concave and convex sections 152, in which roughness skewness has a positive (+) value, may be transferred and formed in the galvanized steel sheet 150, rolled by the rolling roll 110. In one embodiment, widths of the valleys 114b may be formed constant. Here, the fact that the widths of the valleys 114b are constant means not only that widths of all valleys are the same, but also that a width of the valley 114b has a value within ±15% of an average value of the total of valleys formed in a roll or a value within 10% thereof.

Depending on roughness skewness Rsk indicating a size or a shape of the ridge 152a and the valley 152b of the fine concave and convex sections 152 of the galvanized steel sheet 150, V2 (Lubricant Filled Profile Valley Area) serving as a lubricant reservoir while forming the valley 152b of the fine concave and convex sections 152, and whether a direction of the fine concave and convex sections 152 coincides with a flow direction, a repeated friction coefficient and galling properties are significantly affected.

In other words, the roughness skewness is represented by a difference between a height of the ridge 152a and a depth of the valley 152b by a three-dimensional function of the roughness profile. In other words, when a value of the roughness skewness has a positive (+) value, the height of the ridge 152a is greater than the depth of the valley 152b. On the other hand, when the value of the roughness skewness has a negative (-) value, the height of the ridge 152a is less than the depth of the valley 152b. In addition, V2, serving as a lubricant storage, is a form factor indicating a profile area, in which oil such as lubricant, applied to the fine concave and convex sections 152, or the like, remains (Oil pocket).

In this regard, in the galvanized steel sheet 150 formed by skin pass rolling, when the roughness skewness of the fine concave and convex sections 152 has a positive (+) value, a contact area, in contact with the press mold 20 during press forming, is reduced, while V2, serving as a storage of lubricant, is increased. Thus, a galling phenomenon does not easily occur. On the other hand, in the galvanized steel sheet 150, when the roughness skewness of the fine concave and convex sections 152 has a negative (-) value, a contact area with the press mold 20 is increased, while a V2 value is reduced. Thus, the galling phenomenon may easily occur.

In one embodiment, in order to prevent galling in a process in which the galvanized steel sheet 150 is press formed, the fine concave and convex sections 152 may be formed in the galvanized steel sheet 150.

In one embodiment, roughness skewness of the fine concave and convex sections 152 is allowed to have a positive (+) value, a cross section of the fine concave and convex patterns 114, formed in the surface treatment part of the rolling roll, is allowed to have a shape in which one side (a long side, W_{L}) is greater than the other side (a short side, W_{S}), rather than a shape in which dimensions in all directions are the same such as a square or a circle, in order to increase V2, an area of an oil pocket in which lubricant remains, and a lower portion of a concave portion, formed by valleys 114b of the fine concave and convex patterns 114, is formed to be smooth. In this regard, during press forming, occurrence of galling may be prevented. In an embodiment, a cross section of the fine concave and convex patterns 114 may be an oval or a rectangle, but is not limited thereto. However, if one side is greater than the other side, it may be useful in the present disclosure. In the present disclosure, a long side of the fine concave and convex patterns means a maximum length which could be derived, when one end of the fine concave and convex patterns is connected to the other end. In addition, a short side means a short side of a smallest rectangle (that is, a rectangle having the smallest short side) among rectangles accommodating a cross section of the fine concave and convex patterns while a long side of the fine concave and convex patterns is arranged in a long side direction of a rectangle, as a rectangle having a size of a side (a long side), the same as a size of the long side.

On the other hand, the fine concave and convex patterns 114, formed in the surface treatment part of the rolling roll 110, may be formed to have a shape having a difference between the long side W_{L} and the short side W_{S}. For example, the fine concave and convex patterns 114 may be patterned to an oval or a rectangle, but is not limited thereto.

In addition, the fine concave and convex patterns 114 may be arranged such that a short side W_{S} is located in a circumferential direction (that is, a rotation direction) of the rolling roll body 112, and a long side W_{L} is located in an axial direction (that is, a direction corresponding to a width of the galvanized steel sheet 150) of the rolling roll body 112. In the present disclosure, it is to be noted that a circumferential direction means not only a complete circumferential direction, but also a direction corresponding to a range within ±20° from the circumferential direction. In a similar manner, it is to be noted that an axial direction also means a direction corresponding to a range within ±20° from the axial direction.

As described above, the rotation direction (the circumferential direction) of the rolling roll body 112 and the short side W_{S} of the fine concave and convex patterns 114 are allowed to coincide in parallel, and thus force during pressing is prevented from being concentrated. Thus, the oil pocket, formed by the fine concave and convex patterns 114, is recessed vertically and a base surface has a flat shape, so the content of oil, contained in the oil pocket, is increased to significantly reduce frictional resistance with the press mold 20.

In other words, when the galvanized steel sheet 150 is rolled by the rolling roll 110, the fine concave and convex sections 152 of the galvanized steel sheet 150 may be formed to be arranged in a direction in which resistance is not provided to flow of lubricant, or the like. Accordingly, in a process in which the galvanized steel sheet 150 is press formed, sliding frictional resistance with the mold 20 is reduced to prevent galling from occurring.

A length of the long side W_{L} of the fine concave and convex patterns 114 is 100 µm to 500 µm, while a length of the short side W_{S} is 1/2 or less of the long side W_{L}. A depth of the concave and convex sections is preferably 10 µm or more. In addition, according to one embodiment, the fine concave and convex patterns 114 may be formed to have a constant width regardless of depth of the valley (a concave portion; 114b).

In addition, in the fine concave and convex patterns 114, an area, formed by ridges (a convex portion; 114a), is preferably at least 30% of a surface area of the rolling roll body 112. In this case, according to one embodiment of the present disclosure, a portion, formed above based on a roughness center line, is referred to as a 'ridge', and an area in which a ridge portion is projected on a surface of a rolling roll may be an area formed by the ridge.

Here, when a length of the long side W_{L} is 100 µm or less, a length of the short side W_{S} is 50 µm or less. In this regard, in order to impart the fine and regular fine concave and convex patterns 114 to the rolling roll 110, the laser processing technology or the electron beam processing technology with high precision is required, so it is not preferable because of much time and costs. In addition, when a length of the long side W_{L} is 500 µm or more, a shape of concave and convex sections, transferred on a surface of the galvanized steel sheet 150, could be observed with the naked eye, and thus it is not preferable.

In the rolling roll 110, when a depth of the concave and convex sections of the fine concave and convex patterns 114 is 10 µm or more, the fine concave and convex sections 152 having a depth of 6 µm or more is formed on a surface of the galvanized steel sheet 150, and V2, an area of an oil pocket in which lubricant remains, is able to be secured to 450 nm² or more.

Meanwhile, if the depth of the concave and convex sections of the fine concave and convex patterns 114 is less than 10 µm, a depth of the fine concave and convex sections 152, formed in the galvanized steel sheet 150, is less than 6 µm. In this case, since it is impossible to secure a V2 value to be 450 nm² or more, a repeated friction coefficient is 0.15 or more and galling occurred within the friction number of 40 times.

However, if a depth of the concave and convex sections of the fine concave and convex patterns 114 exceeds 25 µm, a depth of the fine concave and convex sections 152, formed in the galvanized steel sheet 150 at the same elongation (load pressure), is limited, so it is impossible to secure the depth to be a maximum 12 µm or more. In this case, it is difficult to expect to reduce the occurrence of galling by a significant increase of a V2 value.

Thus, in the present disclosure, the depth of the concave and convex sections of the fine concave and convex patterns 114 may be at least 10 µm. More preferably, a depth of the concave and convex sections of the fine concave and convex patterns 114 may be 10 µm to 25 µm.

In addition, an area of the ridge (the convex portion; 114a) of the fine concave and convex patterns 114 in the present disclosure is 30% or more of a roll surface area. In this regard, because it is possible that a surface area of valleys (a concave portion; 152b) of the fine concave and convex sections 152, formed on a surface of the galvanized steel sheet 150 by skin pass rolling, is secured to be 30% or more.

The valley (a concave portion; 152b) of the galvanized steel sheet 150 formed as described above serves as an oil pocket in which lubricant is able to be stored during press forming. Thus, as an area of the valley (the concave portion; 152b) is increased, press formability is more excellent. However, if the area is increased more than 50%, due to the excess oil content, effects for decreasing a friction coefficient and improving press formability are not so significant. In addition, if the area of the valley (the concave portion; 152b) is less than 30%, the oil content is not enough, so the press formability is deteriorated.

Thus, in an embodiment, the area of the ridge (the convex portion; 114a) of the fine concave and convex patterns 114 may be at least 30% of a roll surface area, and more preferable, 30% to 50%.

In addition, in an embodiment, in a hot-dip galvanized steel sheet 150, a surface defect such as a flow pattern, spangle uneveness, or the like, may occur on a surface in a manufacturing process. However, in a process in which skin pass rolling is performed by the rolling roll 110 according to an embodiment, the surface defect may be removed.

Preferably, referring to Tables 1 and 2, even when average roughness Ra, a surface roughness value of the galvanized steel sheet 150, the peak number RPc per unit length, and a volume of a concave portion per unit area, are similar, the oil content of a surface, a repeated friction coefficient, and a degree of occurrence of galling show significantly different behaviors. In addition, it is confirmed that the oil content, the repeated friction coefficient, and the degree of occurrence of galling are determined by a shape of the fine concave and convex sections 152 formed on a surface of the galvanized steel sheet 150.

In detail, in an embodiment, it may be processed such that the roughness skewness Rsk of the fine concave and convex patterns 114 of the rolling roll has a value of -0.08 or less. When the roughness skewness Rsk of the fine concave and convex patterns 114 of the rolling roll 110 has a value of -0.08 or less as described above, surface roughness skewness Rsk, formed by the thus formed fine concave and convex sections 152 of the galvanized steel sheet 150, may have a value of 0.19 or more, and V2, an area of an oil pocket, in which lubricant remains, may be formed to be 450 nm² or more.

In the rolling roll 110, as a short side W_{S} of the fine concave and convex patterns 114 is formed to coincide with a circumferential direction, the fine concave and convex sections 152, which coincide with a flow direction of lubricant, may be formed on a surface of the galvanized steel sheet 150. In the galvanized steel sheet 150, frictional resistance during press forming is significantly reduced, so occurrence of galling may be suppressed when processing is performed with the friction number of 40 times or more.

Meanwhile, even when the fine concave and convex sections 152 are regular while having a uniform shape, in the case of a closed shape as a shape of the fine concave and convex sections 152, such as a triangle, a circle, and a quadrangle, the closed shape interferes with the flow of lubricant and the flow of force. In this case, a repeated friction coefficient is 0.15 or more, and galling may occur within the friction number of 40 times.

**[Table 1]**

| No. | Roll Pattern | | | | | | Roll Roughness and Roughness Form Factor | | | Note |
|---|---|---|---|---|---|---|---|---|---|---|
| | Shape | Circumferential Direction* | Width** (µm) | Dist ance (µm) | Dept h (µm) | Area*** (%) | Ra (µm) | RPc (the number /cm) | Rsk | |
| 1 | Irregular | | | | | 40 | 2.7 | 110 | 0.145 | COE |
| 2 | Circle | | 150 | 100 | 20 | 40 | 2.7 | 102 | -0.83 | CE |
| 3 | Oval | Long Side | 300/7 5 | 100 | 20 | 40 | 2.7 | 102 | -0.83 | CE |
| 4 | Oval | Short Side | 300/7 5 | 100 | 20 | 40 | 2.7 | 102 | -0.83 | IE |
| 5 | Quadrangle | | 150 | 100 | 20 | 40 | 2.7 | 102 | -0.83 | CE |
| 6 | Rectangle | Long Side | 300/7 5 | 100 | 20 | 40 | 2.7 | 102 | -0.83 | CE |
| 7 | Rectangle | Short Side | 300/7 5 | 100 | 20 | 40 | 2.7 | 102 | -0.83 | IE |
| 8 | Triangle | Vertex | 185 | 100 | 20 | 40 | 2.7 | 102 | -0.83 | CE |
| 9 | Triangle | Bottom side | 185 | 100 | 20 | 40 | 2.7 | 102 | -0.83 | CE |
| 10 | Rectangle | Short Side | 300/7 5 | 100 | 5 | 40 | 2.7 | 102 | -0.83 | CE |
| 11 | Rectangle | Short Side | 300/7 5 | 100 | 10 | 40 | 2.7 | 102 | -0.83 | IE |
| 12 | Rectangle | Short Side | 300/7 5 | 100 | 15 | 40 | 2.7 | 102 | -0.83 | IE |
| 13 | Rectangle | Short Side | 300/7 5 | 100 | 20 | 40 | 2.7 | 102 | -0.83 | IE |
| 14 | Rectangle | Short Side | 300/7 5 | 100 | 25 | 40 | 2.7 | 102 | -0.83 | IE |
| 15 | Rectangle | Short Side | 300/7 5 | 300 | 20 | 20 | 2.7 | 102 | -0.83 | CE |
| 16 | Rectangle | Short Side | 300/7 5 | 225 | 20 | 25 | 2.7 | 102 | -0.83 | CE |
| 17 | Rectangle | Short Side | 300/7 5 | 175 | 20 | 30 | 2.7 | 102 | -0.83 | IE |
| 18 | Rectangle | Short | 300/7 | 100 | 20 | 40 | 2.7 | 102 | -0.83 | IE |
| 19 | Rectan gle | Short Side | 300/7 5 | 75 | 20 | 50 | 2.7 | 102 | -0.83 | IE |
| 20 | Rectangle | Short Side | 300/7 5 | 50 | 20 | 60 | 2.7 | 102 | -0.83 | IE |

| | | | | | | | | | | |
|---|---|---|---|---|---|---|---|---|---|---|
| * A type of side in which a circumferential direction coincides with a direction. ** Represented in a manner of Long Side/Short Side, and represented by one value when there is no distinction between a Long Side and a Short Side. *** A ratio of an area, formed by ridges, to a surface area of a rolling roll body. ¹⁾ COI: Conventional Example ²⁾ IE: Inventive Example ³⁾ CI: Comparative Example | | | | | | | | | | |

**[Table 2]**

| No. | Operatin g Conditio ns | Steel Sheet Shape Factor | | Press Formability | | Note |
|---|---|---|---|---|---|---|
| | Elongati on(%) | Rsk | V2 (nm²) | Repeated Friction Coefficient | Galling Occurrence s Number | |
| 1 | 1.5 | -0.97 | 250 | 0.268 | 7 | COE |
| 2 | 1.5 | 0.26 | 570 | 0.155 | 40 | CE |
| 3 | 1.5 | 0.51 | 545 | 0.187 | 20 | CE |
| 4 | 1.5 | 0.51 | 545 | 0.130 | Not occurred | IE |
| 5 | 1.5 | 0.35 | 528 | 0.157 | 40 | CE |
| 6 | 1.5 | 0.42 | 573 | 0.171 | 20 | CE |
| 7 | 1.5 | 0.42 | 573 | 0.132 | Not occurred | IE |
| 8 | 1.5 | 0.19 | 456 | 0.200 | 15 | CE |
| 9 | 1.5 | 0.19 | 456 | 0.158 | 40 | CE |
| 10 | 1.5 | 0.32 | 358 | 0.195 | 15 | CE |
| 11 | 1.5 | 0.36 | 465 | 0.142 | Not occurred | IE |
| 12 | 1.5 | 0.32 | 478 | 0.136 | Not occurred | IE |
| 13 | 1.5 | 0.42 | 573 | 0.132 | Not occurred | IE |
| 14 | 1.5 | 0.36 | 555 | 0.140 | Not occurred | IE |
| 15 | 1.5 | 0.08 | 354 | 0.185 | 30 | CE |
| 16 | 1.5 | 0.12 | 389 | 0.172 | 25 | CE |
| 17 | 1.5 | 0.19 | 455 | 0.145 | Not occurred | IE |
| 18 | 1.5 | 0.42 | 573 | 0.132 | Not occurred | IE |
| 19 | 1.5 | 0.6 | 632 | 0.135 | Not occurred | IE |
| 20 | 1.5 | 0.67 | 668 | 0.130 | Not occurred | IE |

| | | | | | | |
|---|---|---|---|---|---|---|
| ¹⁾ COI: Conventional Example ²⁾ IE: Inventive Example ³⁾ CI: Comparative Example | | | | | | |

Meanwhile, FIG. 4 is a cross-sectional view illustrating fine concave and convex patterns of a rolling roll according to the related art for comparison with a rolling roll according to an embodiment. In the rolling roll 30 according to the related art, fine concave and convex patterns 32 are formed irregular while not having a uniform shape. Accordingly, the roughness skewness of the fine concave and convex sections of the galvanized steel sheet formed by skin pass rolling is formed to have a negative (-) value. Accordingly, V2, an area of an oil pocket, in which lubricant remains, is less than 300 nm², relatively small. Thus, during press forming, due to the insufficient lubrication action, the high sliding frictional resistance may be caused, so galling, in which a plated layer is separated during press forming, may occur.

### [Mode for Invention]

### (Example)

An embodiment of the rolling roll 110 configured as described above and a galvanized steel sheet 150 manufactured using the same is as follows.

First, as a first embodiment, a rolling roll 110 according to an embodiment imparted fine concave and convex patterns 114 to a surface treatment part of a rolling roll body 112, by laser texturing (LT) a regular pattern, for example, a shape such as a circle, an oval, a quadrangle, a rectangle, a triangle, and the like. A size of the fine concave and convex patterns 114 was adjusted by changing a width, a space, a depth, and an area as illustrated in Table 1. When a shape was an oval and rectangle, the fine concave and convex patterns 114 were imparted such that a long side W_{L} or a short side W_{S} of the shape coincides with a circumferential direction or a roll.

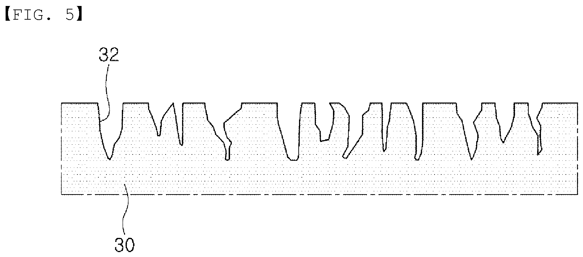

For reference, in the case according to the related art, as illustrated in FIG. 5, the fine concave and convex patterns 32 were imparted using electrical discharge texturing (EDT) on a surface treatment part of the rolling roll 30, and a shape of the fine concave and convex patterns 32 was amorphous without a uniform pattern due to processing characteristics.

The average roughness Ra of the fine concave and convex patterns 114 of the rolling roll 110 according to an embodiment was 2.7 µm, the peak number RPc per unit length was 102/cm, and the roughness skewness Rsk was -0.83. In this case, skin pass rolling was performed at the elongation of 1.5% as illustrated in Table 2 to transfer the fine concave and convex sections 152 on a surface of the hot-dip galvanized steel sheet 150.

A roughness value, such as average roughness of a fine concave and convex patterns 114 of a rolling roll 110 and fine concave and convex sections 152 formed on a surface of a hot-dip galvanized steel sheet 150 skin pass rolled by the rolling roll 110, described above, the peak number per unit length, and the like, as well as a form factor, such as roughness skewness, V2, and the like, were measured using a three-dimensional surface profile measuring apparatus NT8000 manufactured by Veeco Instruments.

The press formability of the hot-dip galvanized steel sheet 150, skin pass rolled, was evaluated by a repeated friction coefficient and the galling occurrence number, the repeated friction number, in which a plated layer was separated during a repetitive friction test, and the result is illustrated in Table 2.

Here, the repeated friction coefficient was obtained using a friction coefficient value after 40 rotations at a rate of 200 mm per second with load of 5 MPa in a tip having a size of 18^{∗}28 mm on a surface of the galvanized steel sheet 150 of 200x200 mm with a high speed rotation friction tester.

In addition, the galling occurrence number was evaluated by observing whether a plated layer was separated for each number of repetitions of the repetitive friction test using a Scanning Electron Microscope (SEM).

As a result of the correlation evaluation, when a repeated friction coefficient was 0.15 or less and a plated layer was not separated until the repeated friction number of 40 times, galling did not occur, and the result is illustrated in Table 1.

According to the results, in the cases (Nos. 4 and 7) in which a shape of the fine concave and convex patterns 114 of the skin pass rolling rolling roll 110 was an oval or a rectangle while a short side Wₛ thereof coincides with a circumferential direction of the rolling roll 110, in the cases (Nos. 17 to 20) in which an area of ridges (a convex portion;114a) of the fine concave and convex patterns 114 of the rolling roll 114 occupies 30% or more of a rolling roll surface area, and in the cases (Nos. 11 to 14) in which a depth of the concave and convex sections of the fine concave and convex patterns 114 formed in the rolling roll 114 was 10 µm or more, roll skewness had a negative (-) value. Here, the roughness skewness of the fine concave and convex sections 152 formed on a surface of the hot-dip galvanized steel sheet 150 skin pass rolled by using the rolling roll had a positive (+) value of 0.19 or more, and V2 has 450 nm² or more. In this case, a repeated friction coefficient was 0.5 or less, and a plated layer was not separated until the repeated friction number of 40 times, so galling properties were excellent.

On the other hand, in the case (No.1) according to the related art, in which the skin pass rolling rolling roll 30 was processed by an electric discharge texturing (EDT) method, the roughness skewness of the hot-dip galvanized steel sheet has a negative (-) value of -0.97, and V2 was 250 nm². Here, a repeated friction coefficient was 0.268, and a plated layer was separated at the repeated friction number of 7 times, so galling occurred. In addition, in the cases (Nos. 2, 5, 8, and 9), in which a shape of the fine concave and convex sections 32 of the skin pass rolling rolling roll was a circle, a quadrangle, or a triangle, even if the fine concave and convex sections of the hot-dip galvanized steel sheet form a regular pattern, the fine concave and convex sections had a closed shape which interfered with the flow of lubricant and the flow of force. In this case, a repeated friction coefficient was 0.15 or more, and galling occurred before the repeated friction number of 40 times.

In detail, in the cases (Nos. 15 and 16) in which a shape of the fine concave and convex patterns 32 of the skin pass rolling rolling roll 30 was rectangle or an area of a convex portion of the fine concave and convex patterns 32 was less than 30% of a surface area of the rolling roll 30, and in the case (No. 10) in which a depth of the fine concave and convex patterns 32 was less than 10 µm, roughness skewness of the hot-dip galvanized steel sheet was 0.19 or less, or V2 was less than 450 nm². In this case, a repeated friction coefficient was 0.15 or more, and galling, in which a plated layer was separated, occurred before the repeated friction number of 40 times.

Meanwhile, in an embodiment, a material, for example, the rolling roll 110 may be used for skin pass rolling the galvanized steel sheet 150, but a specific example of a material is not limited, and it may be used for rolling various types of plated steel sheet. For example, the rolling roll 110 according to an embodiment may be used for all plated steel sheets such as an electric galvanized steel sheet, an electric alloy plate steel sheet, an alloyed hot-dip galvanized steel sheet, a molten aluminum-plated steel sheet, an aluminum alloy plated steel sheet, and the like.

While exemplary embodiments have been shown and described above, it will be apparent to those skilled in the art that modifications and variations could be made without departing from the scope of the present invention as defined by the appended claims.

## Claims

1. A rolling roll, comprising a rolling roll body installed to a rolling mill and used for rolling a material and a surface treatment part formed on a surface of the rolling roll body and coming into contact with the material,
wherein the surface treatment part is formed to have fine concave and convex patterns forming ridges and valleys in a surface, and
the fine concave and convex patterns are formed such that the roughness skewness, indicating the difference between the height of the ridges and the depth of the valleys, has a negative (-) value.

2. The rolling roll of claim 1, wherein the fine concave and convex patterns are arranged such that a short sides of the ridges are positioned in a direction within ±20° in a circumferential direction of the rolling roll body, and long sides of the ridges are positioned in a direction within ±20° in an axial direction of the rolling roll body.

3. The rolling roll of claim 2, wherein, in the fine concave and convex patterns, a length of long sides of the ridges is 100 µm to 500 µm, a length of short sides of the ridges is 1/2 or less of the long side, a depth of the concave and convex sections is 10 µm to 25 µm, and an area, formed by the ridges, is 30% to 50% of a surface area of the rolling roll body.

4. A plated steel sheet, rolled by the rolling roll according to any one of claims 1 to 3 and having fine concave and convex sections corresponding to fine concave and convex patterns of a rolling roll on a surface thereof,
wherein the plated steel sheet is formed such that roughness skewness of the fine concave and convex sections formed on the surface has a positive (+) value, and
an area of an oil pocket, formed between ridges of the fine concave and convex sections in contact with a press forming mold and in which lubricant remains, is at least 450 nm².

5. The plated steel sheet of claim 4, wherein roughness skewness of the fine concave and convex sections formed on a surface is at least 0.19.
